# EUROPEAN PATENT APPLICATION

(11) **EP 4 506 351 A1**
(43) Date of publication of application: **12.02.2025**
(21) Application number: 23781372.0
(22) Date of filing: 30.03.2023
(51) Int. Cl.: C07F 17/00, C07F 7/28, C08F 210/16, C08F 210/14, C08F 4/646, C08F 4/6592, C08F 4/659

(54) **TRANSITION METAL COMPOUND FOR OLEFIN POLYMERIZATION CATALYST, OLEFIN POLYMERIZATION CATALYST COMPRISING SAME, AND POLYOLEFIN POLYMERIZED USING SAME**

(30) Priority: 01.04.2022 KR 20220041318
(71) Applicant: Hanwha Solutions Corporation, Jung-gu Seoul 04541 (KR)
(72) Inventor: PARK, Seongyeon, Daejeon 34128 (KR); KIM, Dong Wook, Daejeon 34128 (KR); PARK, Ranwha, Daejeon 34128 (KR); LEE, Won Jong, Daejeon 34128 (KR); KIM, Kyungwoo, Daejeon 34128 (KR); JEONG, Taeho, Daejeon 34128 (KR)
(74) Representative: Berggren Oy
(86) International application number: PCT/KR2023/004225
(87) International publication number: WO 2023/191519

(57) **Abstract**

Provided are a transition metal compound for a catalyst for olefin polymerization where a cyclopentadienyl group and a silane substituent are introduced and the cyclopentadienyl group is connected by a bridge, a catalyst for olefin polymerization including the same, and a polyolefin polymerized using the same. Since the transition metal compound for a catalyst for olefin polymerization and the catalyst for olefin polymerization including the same according to an exemplary embodiment of the present invention have a unique stereostructure structure, the physical properties of the polymer may be adjusted, and in particular, a polyolefin-based resin having excellent processability may be prepared.

## Description

### [Technical Field]

The present invention relates to a transition metal compound for a catalyst for olefin polymerization, a catalyst for olefin polymerization including the same, and a polyolefin polymerized using the same. Specifically, the present invention relates to a transition metal compound for a catalyst for olefin polymerization where a cyclopentadienyl group and a silane substituent are introduced and the cyclopentadienyl group is connected by a bridge, a catalyst for olefin polymerization including the same, and a polyolefin polymerized using the same.

### [Background Art]

A metallocene catalyst is one of the catalysts used in olefin polymerization, which is a compound in which a ligand such as cyclopentadienyl, indenyl, or cycloheptadienyl is coordinated to a transition metal or a transition metal halogen compound, and has a sandwich structure as a basic form.

A Ziegler-Natta catalyst, which is another catalyst used for polymerizing olefins, has an active site having heterogeneous properties, since a metal component as the active site is dispersed on an inert solid surface; however, the metallocene catalyst is known as a single-site catalyst having identical polymerization properties in all active sites, since it is one compound having a certain structure. A polymer polymerized with the metallocene catalyst as such has a narrow molecular weight distribution, a uniform comonomer distribution, and copolymerization activity higher than the Ziegler Natta catalyst.

However, a catalyst for olefin polymerization which allows preparation of a polyolefin-based resin having excellent processability is still demanded.

### [Disclosure]

### [Technical Problem]

An object of the present invention is to provide a transition metal compound for a catalyst for olefin polymerization which allows preparation of a polyolefin-based resin having excellent processability and has a novel structure, a catalyst for olefin polymerization including the same, and a polyolefin polymerized using the same.

### [Technical Solution]

In one general aspect, a transition metal compound represented by the following Chemical Formula 1 is provided: 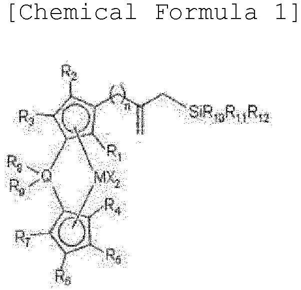 wherein n is an integer of 1 to 20,
M is titanium (Ti), zirconium (Zr), or hafnium (Hf),
X is independently of each other a halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido,
Q is carbon (C), silicon (Si), germanium (Ge), or tin (Sn),
R₁ to R₇ are independently of one another hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl, but R₁ to R₇ may be independently of one another connected to an adjacent group to form a substituted or unsubstituted and saturated or unsaturated C₄₋₂₀ ring,
R₈ and R₉ are independently of each other substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl, but R₈ and R₉ may be connected to each other to form a substituted or unsubstituted and saturated or unsaturated C₂₋₂₀ ring, and
R₁₀ to R₁₂ are independently of one another substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl.

In a specific example of the present invention, in Chemical Formula 1, n may be 1 or 2, M may be zirconium or hafnium, X may be a halogen or substituted or unsubstituted C₁₋₂₀ alkyl, Q may be silicon, R₁ to R₃ may be hydrogen, respectively, R₄ to R₇ may be hydrogen or substituted or unsubstituted C₁₋₂₀ alkyl, respectively, R₈ and R₉ may be substituted or unsubstituted C₁₋₂₀ alkyl, respectively, and R₁₀ to R₁₂ may be substituted or unsubstituted C₁₋₂₀ alkyl or substituted or unsubstituted C₆₋₂₀ aryl, respectively.

In a preferred specific example of the present invention, the compound represented by Chemical Formula 1 may be any one of the compounds represented by the following Chemical Formulae 1-1 to 1-16: 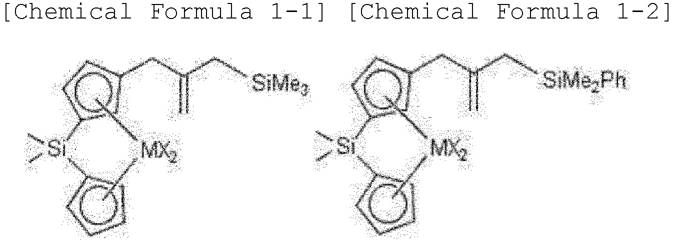 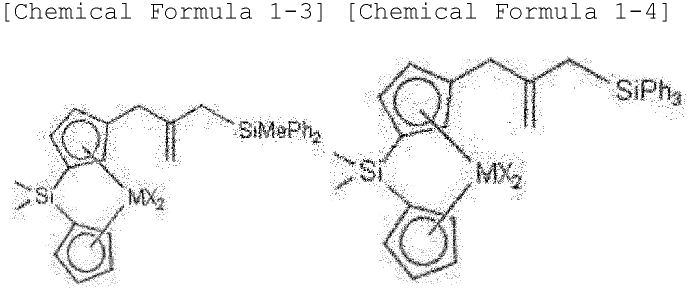 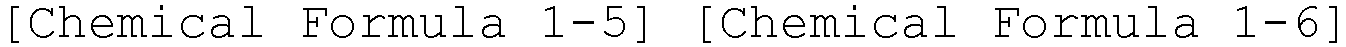 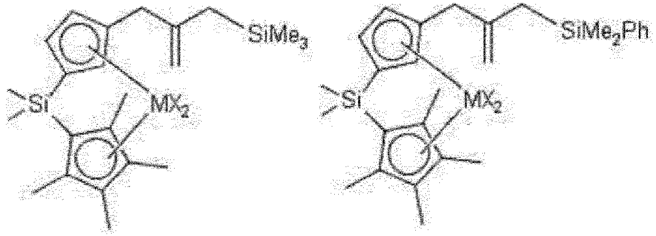 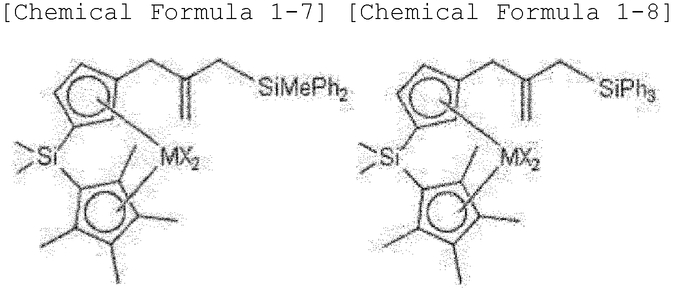 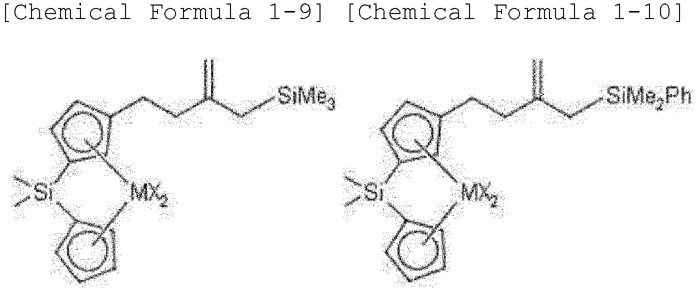 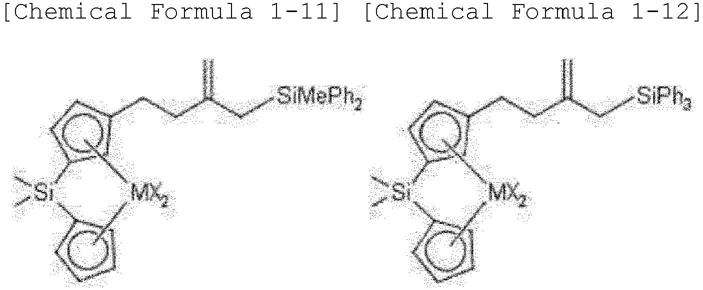 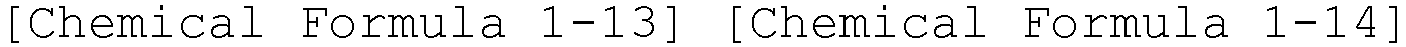 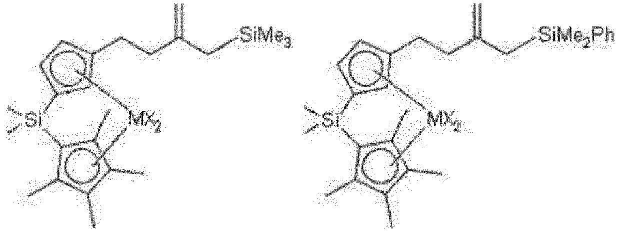 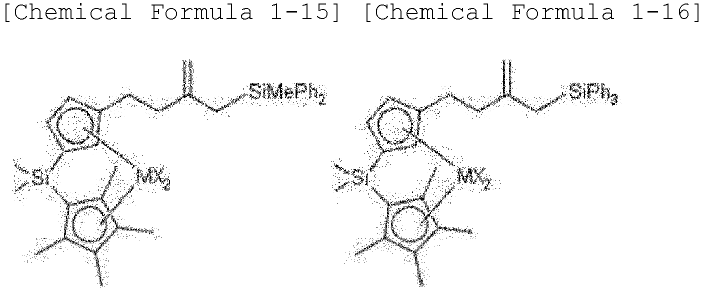 wherein M is zirconium or hafnium, X is a halogen or substituted or unsubstituted C₁₋₂₀ alkyl, respectively, Me is a methyl group, and Ph is a phenyl group.

In a preferred specific example of the present invention, the compound represented by Chemical Formula 1 may be a compound represented by the following Chemical Formula 1-17 or 1-18: 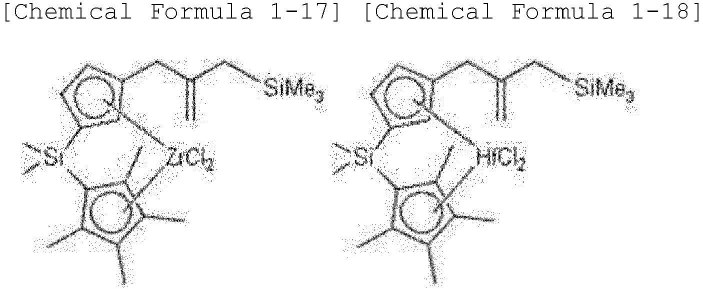 wherein Me is a methyl group.

In another general aspect, a catalyst for olefin polymerization includes: the transition metal compound; and a cocatalyst compound.

In a specific example of the present invention, the cocatalyst compound may be one or more selected from the group consisting of a compound represented by the following Chemical Formula 2, a compound represented by the following Chemical Formula 3, and a compound represented by the following Chemical Formula 4:

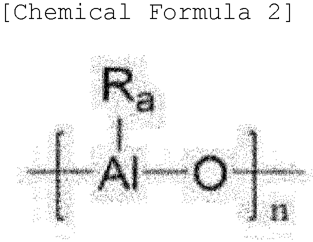

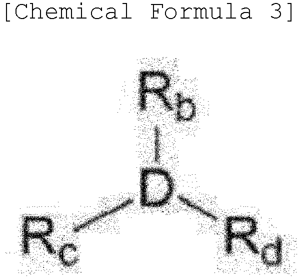

[Chemical Formula 4] [L-H]⁺[Z(A)₄]⁻ or [L]⁺[Z(A)₄]⁻

wherein n is an integer of 2 or more, Rₐ is a halogen atom, a C₁₋₂₀ hydrocarbon group, or a C₁₋₂₀ hydrocarbon group substituted with a halogen,
D is aluminum (Al) or boron (B), R_{b}, R_{c}, and R_{d} are independently of one another a halogen atom, a C₁₋₂₀ hydrocarbon group, a C₁₋₂₀ hydrocarbon group substituted with a halogen, or a C₁₋₂₀ alkoxy group,
L is a neutral or cationic Lewis base, [L-H]⁺ and [L]⁺ are a Bronsted acid, Z is a group 13 element, and A is independently of each other a substituted or unsubstituted C₆₋₂₀ aryl group or a substituted or unsubstituted C₁₋₂₀ alkyl group.

In a preferred specific example of the present invention, the compound represented by Chemical Formula 2 may be at least one selected from the group consisting of methylaluminoxane, ethylaluminoxane, isobutylaluminoxane, and butylaluminoxane.

In a preferred specific example of the present invention, the compound represented by Chemical Formula 3 may be at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-*p*-tolylaluminum, dimethylaluminummethoxide, dimethylaluminumethoxide, trimethylboron, triethylboron, triisobutylboron, tripropylboron, and tributylboron.

In a preferred specific example of the present invention, the compound represented by Chemical Formula 4 may be at least one selected from the group consisting of triethylammonium tetraphenylboron, tributylammonium tetraphenylboron, trimethylammonium tetraphenylboron, tripropylammonium tetraphenylboron, trimethylammonium tetra(*p*-tolyl)boron, trimethylammonium tetra(*o,p-*dimethylphenyl) boron, tributylammonium tetra(*p-*trifluoromethylphenyl)boron, trimethylammonium tetra(*p-*trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(*p*-tolyl)aluminum, tripropylammonium tetra(*p-*tolyl)aluminum, triethylammonium tetra(*o,p-*dimethylphenyl)aluminum, tributylammonium tetra(*p-*trifluoromethylphenyl) aluminum, trimethylammonium tetra(*p-*trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammoniumtetra (*p*-tolyl) boron, triethylammonium tetra (*o*,*p*-dimethylphenyl)boron, tributylammonium tetra(*p*-trifluoromethylphenyl)boron, triphenylcarbonium tetra(*p*-trifluoromethylphenyl)boron, and triphenylcarbonium tetrapentafluorophenylboron.

In a specific example of the present invention, the catalyst for olefin polymerization may further include a carrier for supporting the transition metal compound. In a specific example of the present invention, the carrier may support both the transition metal compound and the cocatalyst compound. In a further preferred specific example of the present invention, the carrier may include at least one selected from the group consisting of silica, alumina, and magnesia.

In a specific example of the present invention, an amount of the transition metal compound supported on the carrier may be 0.001 to 1 mmol based on 1 g of the carrier, and an amount of the cocatalyst compound supported on the carrier may be 2 to 15 mmol based on 1 g of the carrier.

In still another general aspect, a polyolefin obtained by polymerizing an olefin-based monomer in the presence of the catalyst for olefin polymerization is provided.

In a specific example of the present invention, the olefin-based monomer may be at least one selected from the group consisting of C₂₋₂₀ α-olefin, C₁₋₂₀ diolefin, C₃₋₂₀ cycloolefin, and C₃₋₂₀ cyclodiolefin.

In a preferred specific example of the present invention, the polyolefin may be obtained by copolymerizing ethylene and 1-hexene.

### [Advantageous Effects]

Since the transition metal compound for a catalyst for olefin polymerization and the catalyst for olefin polymerization including the same according to an exemplary embodiment of the present invention have a unique stereostructure, the physical properties of the polymer may be adjusted, and in particular, a polyolefin-based resin having excellent processability may be prepared.

### [Best Mode]

Hereinafter, the present invention will be described in more detail.

### Transition metal compound for catalyst for olefin polymerization

According to a specific example of the present invention, a transition metal compound represented by the following Chemical Formula 1 is provided:

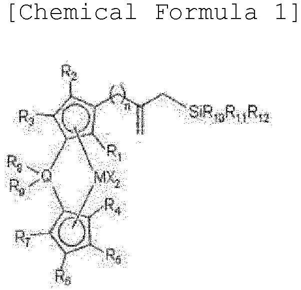

In Chemical Formula 1, n is an integer of 1 to 20, preferably an integer of 1 to 10, and more preferably an integer of 1 to 5. Specifically, n may be 1 or 2.

M is titanium (Ti), zirconium (Zr), or hafnium (Hf). Specifically, M may be zirconium or hafnium.

X is independently of each other a halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido. Specifically, X may be a halogen or substituted or unsubstituted C₁₋₂₀ alkyl, respectively. More specifically, X may be chlorine, respectively.

Q is carbon (C), silicon (Si), germanium (Ge), or tin (Sn). Specifically, Q may be silicon.

R₁ to R₇ are independently of one another hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl. Specifically, R₁ to R₃ may be hydrogen, respectively, and R₄ to R₇ may be hydrogen or substituted or unsubstituted C₁₋₂₀ alkyl, respectively. In addition, R₁ to R₇ may be independently of one another connected to an adjacent group to form a substituted or unsubstituted and saturated or unsaturated C₄₋₂₀ ring.

R₈ and R₉ are independently of each other substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl. Specifically, R₈ and R₉ may be substituted or unsubstituted C₁₋₂₀ alkyl, respectively. More specifically, R₈ and R₉ may be methyl, respectively. In addition, R₈ and R₉ may be connected to each other to form a substituted or unsubstituted and saturated or unsaturated C₂₋₂₀ ring.

R₁₀ to R₁₂ are independently of one another substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl. Specifically, R₁₀ to R₁₂ may be substituted or unsubstituted C₁₋₂₀ alkyl or substituted or unsubstituted C₆₋₂₀ aryl, respectively. More specifically, R₁₀ to R₁₂ may be methyl or phenyl, respectively.

In a preferred specific example of the present invention, the compound represented by Chemical Formula 1 may be any one of compounds represented by the following Chemical Formulae 1-1 to 1-16: 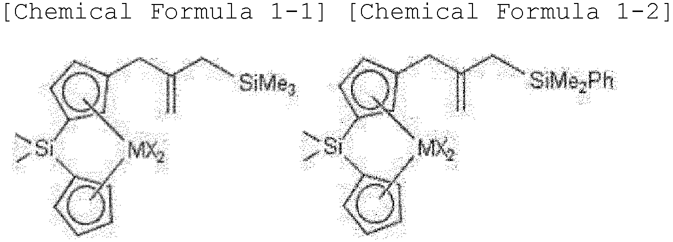 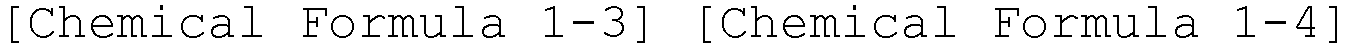 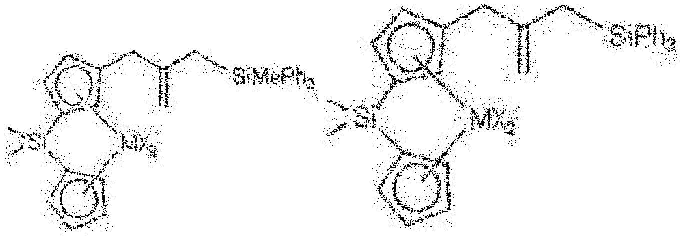 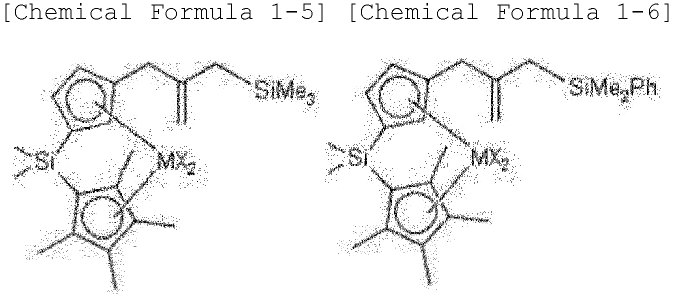 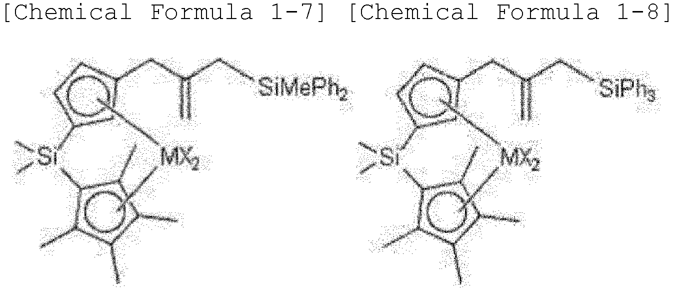 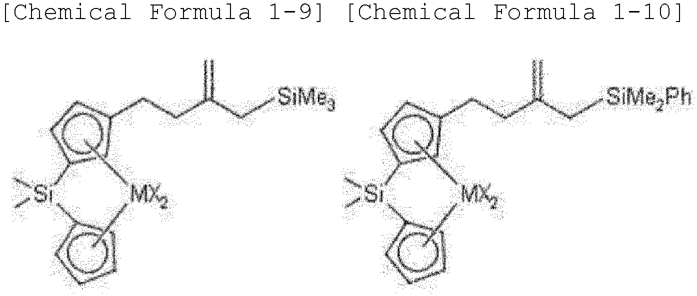 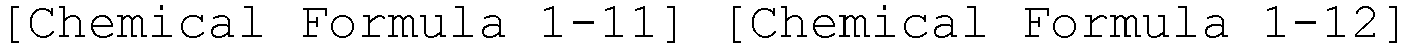 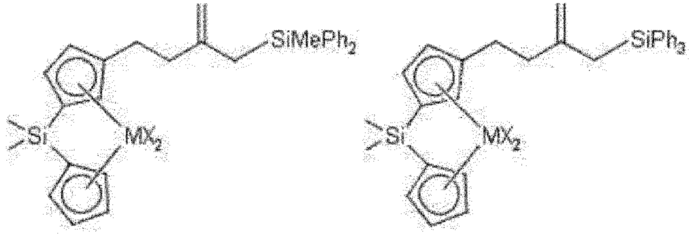 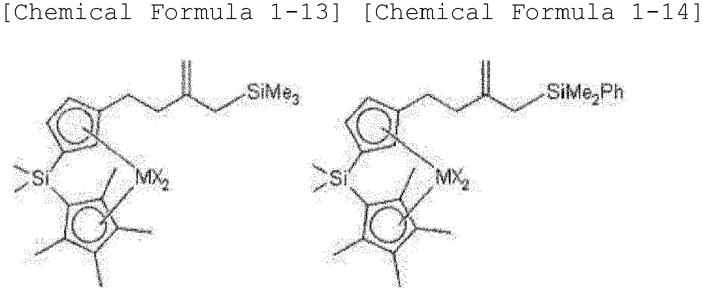 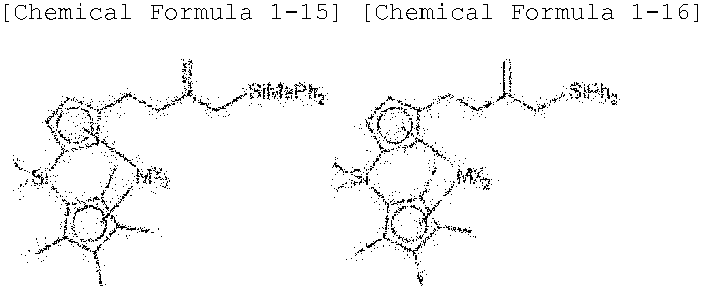 wherein M is zirconium or hafnium, X is a halogen or substituted or unsubstituted C₁₋₂₀ alkyl, respectively, Me is a methyl group, and Ph is a phenyl group.

In a more preferred specific example of the present invention, the compound represented by Chemical Formula 1 may be a compound represented by the following Chemical Formula 1-17 or 1-18: 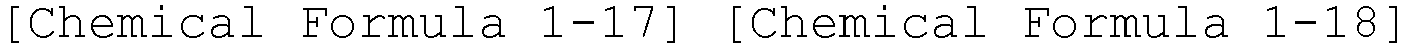 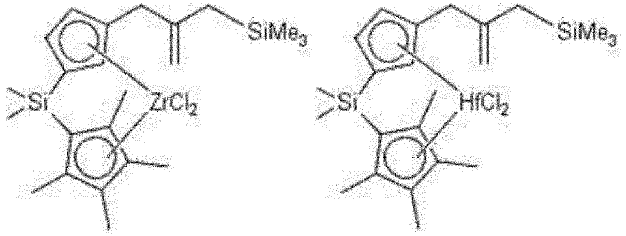 wherein Me is a methyl group.

### Catalyst for olefin polymerization

According to another exemplary embodiment of the present invention, a catalyst for olefin polymerization including: a transition metal compound represented by the following Chemical Formula 1; and a cocatalyst compound is provided: 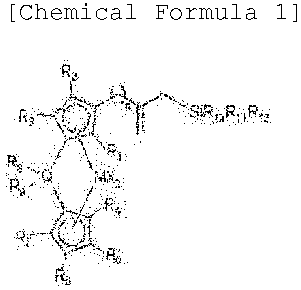 wherein n, M, X, Q, and R₁ to R₁₂ are as defined for the transition metal compound above.

In a specific example of the present invention, the compound represented by Chemical Formula 1 may be any one of the following Chemical Formulae 1-1 to 1-16: 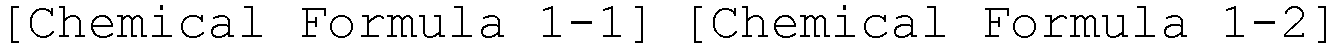 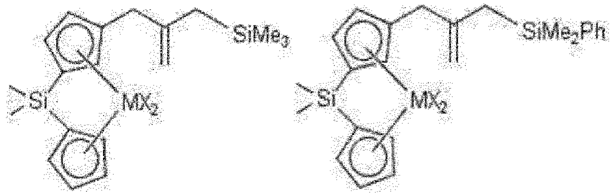 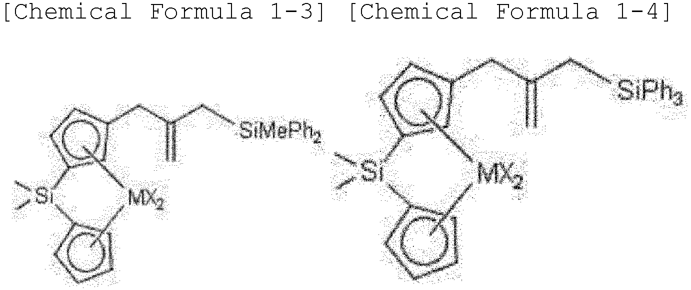 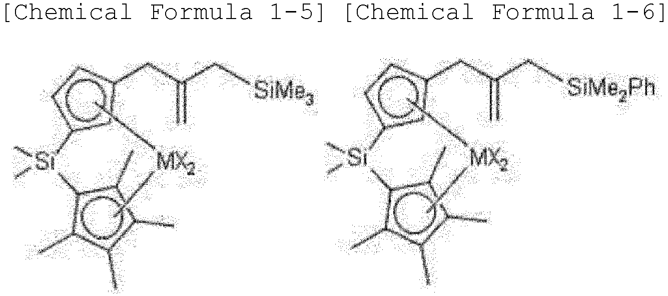 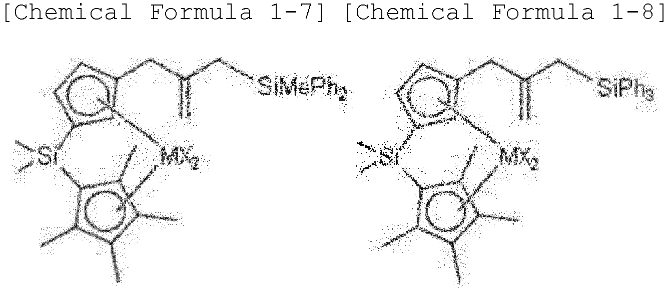 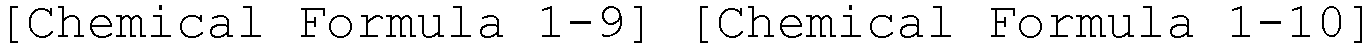 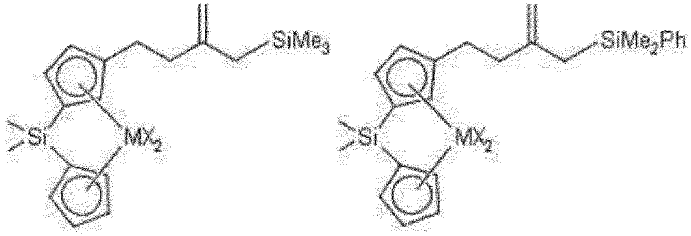 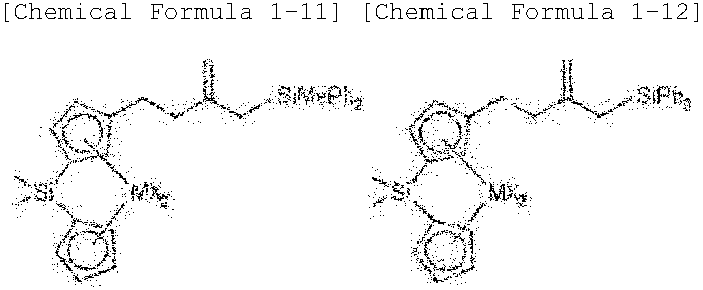 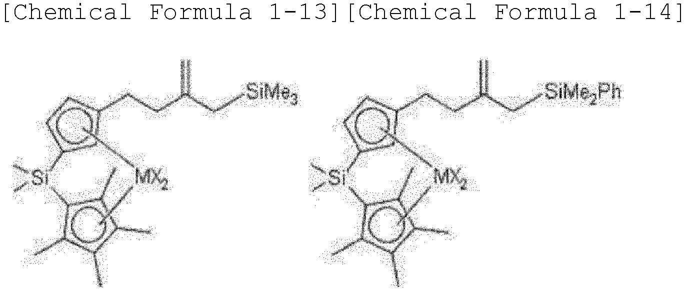 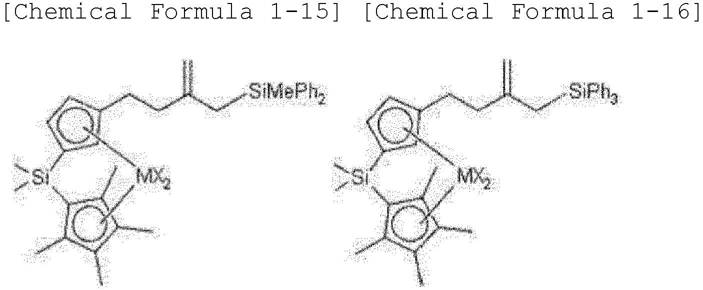 wherein M, X, Me, and Ph are as defined for the transition metal compound above.

In a preferred specific example of the present invention, the compound represented by Chemical Formula 1 may be a compound represented by the following Chemical Formula 1-17 or 1-18: 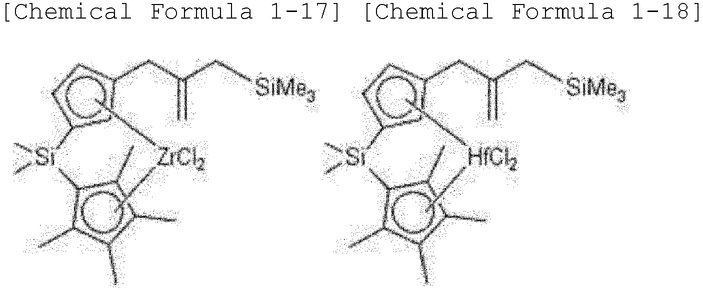 wherein Me is as defined for the transition metal compound above.

In a specific example of the present invention, the cocatalyst compound may include one or more of a compound represented by the following Chemical Formula 2, a compound represented by the following Chemical Formula 3, and a compound represented by the following Chemical Formula 4:

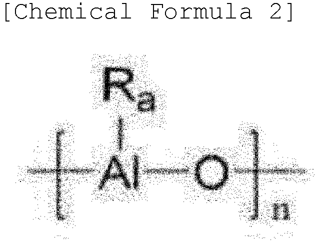

In Chemical Formula 2, n is an integer of 2 or more, Rₐ is a halogen atom, C₁₋₂₀ hydrocarbon, or C₁₋₂₀ hydrocarbon substituted with a halogen. Specifically, Rₐ may be methyl, ethyl, n-butyl, or isobutyl.

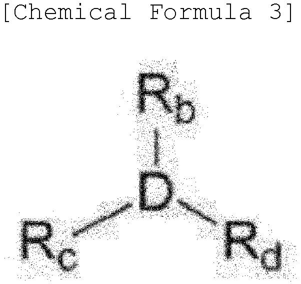

In Chemical Formula 3, D is aluminum (Al) or boron (B), and R_{b}, R_{c}, and R_{d} are independently of one another a halogen atom, a C₁₋₂₀ hydrocarbon group, a C₁₋₂₀ hydrocarbon group substituted with a halogen, or a C₁₋₂₀ alkoxy group. Specifically, when D is aluminum (Al), R_{b}, R_{c}, and R_{d} may be independently of one another methyl or isobutyl, and when D is boron (B), R_{b}, R_{c}, and R_{d} may be pentafluorophenyl, respectively.

[Chemical Formula 4] [L-H]⁺[Z(A)₄]⁻ or [L]⁺[Z(A)₄]⁻

In Chemical Formula 4, L is a neutral or cationic Lewis base, [L-H]⁺ and [L]⁺ are a Bronsted acid, Z is a group 13 element, and A is independently of each other a substituted or unsubstituted C₆₋₂₀ aryl group or a substituted or unsubstituted C₁₋₂₀ alkyl group. Specifically, [L-H]⁺ may be dimethylanilinium cation, [Z(A)₄]⁻ may be [B(C₆F₅)₄]⁻, and [L]⁺ may be [(C₆H₅)₃C]⁺.

Specifically, an example of the compound represented by Chemical Formula 2 includes methylaluminoxane, ethylaluminoxane, isobutylaluminoxane, butylaluminoxane, and the like, and is preferably methylaluminoxane, but is not limited thereto.

An example of the compound represented by Chemical Formula 3 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 4 may include triethylammonium tetraphenylboron, tributylammonium tetraphenylboron, trimethylammonium tetraphenylboron, tripropylammonium tetraphenylboron, trimethylammonium tetra (*p*-tolyl)boron, trimethylammonium tetra (*o*,*p*-dimethylphenyl) boron, tributylammonium tetra (*p-*trifluoromethylphenyl) boron, trimethylammonium tetra (*p-*trifluoromethylphenyl) boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(*p*-tolyl)aluminum, tripropylammonium tetra(*p-*tolyl)aluminum, triethylammonium tetra(*o,p-*dimethylphenyl)aluminum, tributylammonium tetra(*p-*trifluoromethylphenyl) aluminum, trimethylammonium tetra(*p-*trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammoniumtetra(*p*-tolyl)boron, triethylammonium tetra(*o*,*p*-dimethylphenyl)boron, tributylammonium tetra(*p*-trifluoromethylphenyl)boron, triphenylcarbonium tetra(*p*-trifluoromethylphenyl)boron, and triphenylcarbonium tetrapentafluorophenylboron, and the like.

In a specific example of the present invention, the catalyst for olefin polymerization may further include a carrier for supporting the transition metal compound. In a preferred specific example of the present invention, the carrier may support both the transition metal compound and the cocatalyst compound.

Herein, the carrier may include a material containing a hydroxyl group on the surface, and preferably, may use a material having highly reactive hydroxyl group and siloxane group which is dried to remove moisture from the surface. For example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as Na₂O, K₂CO₃, BaSO₄, and Mg(NO₃)₂. In addition, these may include carbon, zeolite, magnesium chloride, and the like. However, the carrier is not limited thereto, and is not particularly limited as long as it may support a transition metal compound and a cocatalyst compound.

As a method of supporting the transition metal compound and/or the cocatalyst compound which may be used in the catalyst for olefin polymerization, a physical adsorption method or a chemical adsorption method may be used.

For example, the physical adsorption method may be a method of bringing a solution in which a transition metal compound is dissolved into contact with a carrier and then drying, a method of bringing a solution in which a transition metal compound and a cocatalyst compound are dissolved into contact with a carrier and then drying, a method of bringing a solution in which a transition metal compound is dissolved into contact with a carrier and then drying to produce a carrier on which the transition metal compound is supported, separately bringing a solution in which a cocatalyst compound is dissolved into contact with a carrier and then drying to produce a carrier on which the cocatalyst compound is supported, and then mixing them, or the like.

The chemical adsorption method may be a method of first supporting a cocatalyst compound on the surface of a carrier and then supporting a transition metal compound on the cocatalyst compound, a method of binding a functional group (for example, in the case of silica, a hydroxyl group (-OH) on the surface of silica) on the surface of a carrier and a catalyst compound covalently.

The amount of the transition metal compound supported on the carrier may be 0.001 to 1 mmol based on 1 g of the carrier. When a ratio between the transition metal compound and the carrier satisfies the above range, appropriate supported catalyst activity is shown, which is advantageous in terms of the activity maintenance and economic feasibility of a catalyst.

The amount of the cocatalyst compound supported on the carrier may be 2 to 15 mmol based on 1 g of the carrier. When the ratio of the cocatalyst compound and the carrier satisfies the above range, it is advantageous in terms of the activity maintenance and economic feasibility of a catalyst.

One or two or more carriers may be used. For example, both the transition metal compound and the cocatalyst compound may be supported on one carrier, and each of the transition metal compound and the cocatalyst compound may be supported on two or more carriers. In addition, only one of the transition metal compound and the cocatalyst compound may be supported on the carrier.

### Polymerization of olefin

An olefin-based polymer may be prepared by polymerizing an olefin-based monomer in the presence of the catalyst for olefin polymerization according to a specific example of the present invention.

Herein, the olefin-based polymer may be a homopolymer of an olefin-based monomer or a copolymer of olefin-based monomer and comonomer.

The olefin-based monomer may be at least one selected from the group consisting of C₂₋₂₀ α-olefin, C₁₋₂₀ diolefin, C₃₋₂₀ cycloolefin, and C₃₋₂₀ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like and the olefin-based polymer may be a homopolymer including only one of the olefin-based monomers exemplified above or a copolymer including two or more thereof.

In an illustrative example, the olefin-based polymer may be a copolymer in which ethylene and C₃₋₂₀ α-olefin are copolymerized, and a copolymer in which ethylene and 1-hexene are copolymerized is preferred, but is not limited thereto.

In this case, the content of ethylene is preferably 55 to 99.9 wt%, and more preferably 90 to 99.9 wt%. The content of the α-olefin-based comonomer is preferably 0.1 to 45 wt%, and more preferably 0.1 to 10 wt%.

The olefin-based polymer according to a specific example of the present invention may be polymerized by a polymerization reaction such as free radical, cationic, coordination, condensation, and addition polymerization, but is not limited thereto.

In a preferred exemplary embodiment example, the olefin-based polymer may be prepared by a gas phase polymerization method, a solution polymerization method, a slurry polymerization method, or the like. When the olefin-based polymer is prepared by a solution polymerization method or a slurry polymerization method, an example of the solvent to be used may include a C₅₋₁₂ aliphatic hydrocarbon solvent such as pentane, hexane, heptane, nonane, decane, and isomers thereof; an aromatic hydrocarbon solvent such as toluene and benzene; a hydrocarbon solvent substituted by a chlorine atom such as dichloromethane and chlorobenzene; and a mixture thereof, but is not limited thereto.

### Examples

Hereinafter, the present disclosure will be specifically described through the following examples. However, the following examples are only illustrative of the present invention, and do not limit the scope of the present invention.

### Preparation Example 1: Preparation of dimethylsilane[(2-trimethylsilylmethylallyl)cyclopentadienyl](2,3,4,5-tetramethylcyclopentadienyl) zirconium dichloride (Chemical Formula 1-17)

### (2-(Cyclopentadienylmethyl)allyl) trimethylsilane

Sodium cyclopentadienide (6.92 g, 14.7 mmol, 2.4 M tetrahydrofuran solution) was slowly added dropwise to a solution of 2-(trimethylsilylmethyl) allyl chloride (2 g, 12.3 mmol) diluted with tetrahydrofuran(40 ml) at -30°C, the temperature was slowly raised to room temperature, and stirring was performed for 12 hours. Distilled water was added at 0°C to terminate the reaction, and then extraction was performed with diethyl ether to separate an organic layer. Remaining water was removed with magnesium sulfate (MgSO₄), and separation was performed with column chromatography (hexane) to obtain 2.01 g (85%) of light brown oil.

¹H-NMR (CDCl₃, 300 MHz): δ 6.42-6.02 (m, 4H), 4.60-4.55 (m, 2H), 3.06-2.97 (m, 2H), 2.87-2.85 (m, 2H), 1.54 (s, 2H), 0.03 (d, 9H).

### Dimethyl[(2-trimethylsilylmethylallyl)cyclopentadienyl](2,3,4,5-tetramethylcyclopentadienyl) silane

n-BuLi (2.43 g, 5.72 mmol, 1.6 M hexane solution) was slowly added to a solution of (2-(cyclopentadienylmethyl)allyl) trimethylsilane (1 g, 5.19 mmol) diluted with tetrahydrofuran (20 ml) at -30°C, the temperature was slowly raised to room temperature, and stirring was performed for 12 hours. The solvent of the reaction solution was dried under vacuum to obtain a light yellow solid compound. Dimethylsilyl(2,3,4,5-tetramethylcyclopentadienyl) chloride (1.12 g, 5.19 mmol) was slowly added dropwise to a solution of the solid compound diluted with tetrahydrofuran(20 ml) at -30°C, the temperature was slowly raised to room temperature, and stirring was performed for 12 hours. The solvent was removed under vacuum, extraction with hexane was performed, and filtration was performed. The solvent was removed under vacuum to obtain 1.93 g (100%) of a yellow liquid compound.

### Dimethylsilane[(2-trimethylsilylmethylallyl)cyclopentadienyl](2,3,4,5-tetramethylcyclopentadienyl) lithium

n-BuLi (4.67 g, 11.0 mmol, 1.6 M hexane solution) was slowly added to a solution of dimethyl[(2-trimethylsiylmethylallyl)cyclopentadienyl](2,3,4,5-tetramethylcyclopentadienyl)silane) (1.93 g, 5.21 mmol) diluted with diethyl ether (20 ml) at -30°C, the temperature was slowly raised to room temperature, and stirring was performed for 12 hours. The solvent of the reaction solution was removed under vacuum, and the reactant was filtered with hexane. The solvent was removed under vacuum to obtain 2 g (100%) of a yellow solid compound.

### Dimethylsilane[(2-trimethylsilylmethylallyl)cyclopentadienyl](2,3,4,5-tetramethylcyclopentadienyl) zirconium dichloride

Zirconium tetrachloride (ZrCl₄) (610 mg, 2.61 mmol) was slowly added to a solution of (dimethylsilane[(2-trimethylsilylmethylallyl)cyclopentadienyl](2,3,4,5-tetramethylcyclopentadienyl) lithium) (1 g, 2.61 mmol) diluted with toluene (20 ml) at -30°C, the temperature was slowly raised to room temperature, and stirring was performed for 12 hours. When the reaction ended, the reaction solution was filtered, and then the solvent of the filtrate was dried under vacuum. The produced solid was dried to obtain 540 mg (39%) of a yellow solid compound.

¹H-NMR (CDCl₃, 500 MHz): δ 6.68 (m, 1H), 5.67 (m, 1H), 5.31 (m, 1H), 4.56 (s, 1H), 4.48 (s, 1H), 3.34 (m, 1H), 2.08 (s, 3H), 2.04 (s, 3H), 1.95 (s, 3H), 1.88 (s, 3H), 1.53 (s, 3H), 0.84 (s, 3H), 0.81 (s, 3H), 0.04 (s, 9H).

### Preparation Example 2: Preparation of dimethylsilane[(2-trimethylsilylmethylallyl)cyclopentadienyl](2,3,4,5-tetramethylcyclopentadienyl) hafnium dichloride (Chemical Formula 1-18)

Hafnium tetrachloride (HfCl₄) (840 mg, 2.61 mmol) was slowly added to a solution of dimethylsilane[(2-trimethylsilylmethylallyl)cyclopentadienyl](2,3,4,5-tetramethylcyclopentadienyl) lithium (1 g, 2.61 mmol) obtained in the same manner as in Preparation Example 1 diluted with toluene (20 ml) at -30°C, the temperature was slowly raised to room temperature, and stirring was performed for 12 hours. When the reaction ended, the reaction solution was filtered, and then the solvent of the filtrate was dried under vacuum. The produced solid was dried to obtain 570 mg (35%) of a yellow solid compound.

¹H-NMR (CDCl₃, 500 MHz): δ 6.59 (m, 1H), 5.63 (m, 1H), 5.27 (m, 1H), 4.55 (s, 1H), 4.47 (s, 1H), 3.35 (m, 1H), 2.10 (s, 3H), 2.07 (s, 3H), 2.03 (s, 3H), 1.95 (s, 3H), 1.53 (s, 3H), 0.83 (s, 3H), 0.80 (s, 3H), 0.04 (s, 9H).

### Preparation Example 3: Preparation of [(2-trimethylsilylmethylallyl)cyclopentadienyl](cyclopentadieny l) zirconium dichloride (Chemical Formula A-1)

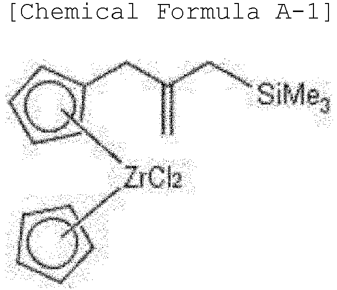

Cyclopentadienyl zirconium trichloride (CpZrCl₃) (40 mg, 0.15 mmol) was slowly added to a solution of 2-[2-(trimethylsilylmethyl)allyl] cyclopentadienyl lithium(30 mg, 0.15 mmol) diluted with toluene/tetrahydrofuran (1.5 ml) at -30°C, the temperature was slowly raised to room temperature, and stirring was performed for 12 hours. When the reaction ended, the reaction solution was filtered, and then the solvent of the filtrate was dried under vacuum. The produced solid was washed with hexane and dried to obtain 27 mg (43 %) of a light brown solid compound.

¹H-NMR (CDCl₃, 300 MHz): δ 6.46 (s, 5H), 6.33 (t, 2H), 6.23 (t, 2H), 4.55 (d, 1H), 4.44 (d, 1H), 3.27 (s, 2H), 1.52 (s, 2H), 0.05 (s, 9H).

### Preparation Example 4: Preparation of [(2-trimethylsilylmethylallyl)cyclopentadienyl] (pentamethylcyclopentadienyl) zirconium dichloride (Chemical Formula A-2)

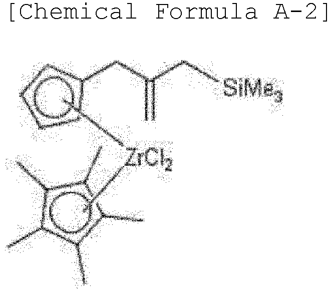

Pentamethylcyclopentadienyl zirconium trichloride (Cp*ZrCl₃) (168 mg, 0.50 mmol) was slowly added to a solution of 2-[2-(trimethylsilylmethyl)allyl] cyclopentadienyl lithium(100 mg, 0.50 mmol) obtained in the same manner as in Preparation Example 3 diluted with toluene/tetrahydrofuran (3.0 ml) at -30°C, the temperature was slowly raised to room temperature, and stirring was performed for 12 hours. When the reaction ended, the reaction solution was filtered, and then the solvent of the filtrate was dried under vacuum. The produced solid was washed with hexane and dried to obtain 180 mg (73 %) of a light brown solid compound.

¹H-NMR (CDCl₃, 300 MHz): δ 6.05 (t, 2H), 5.97 (t, 2H), 4.53 (m, 1H), 4.43 (m, 1H), 3.24 (s, 2H), 2.03 (s, 15H), 0.04 (s, 9H).

### Example 1: Synthesis of ethylene 1-hexene copolymer using Compound 1-17

A polyolefin was polymerized using the transition metal compound (Compound 1-17) obtained in Example 1. Specifically, a 2-liter autoclaved reactor was used for polymerization. All reagents were used in inert conditions using a glove box or Schlenk technology.

Foreign matters such as moisture and oxygen were removed under vacuum at 100°C for about 20 minutes, 1 liter of hexane was injected into the reactor, stirring was performed at 200 rpm, and the temperature was raised up to 80°C which was a polymerization temperature. Thereafter, Compound 1-17 and methylaluminoxane (MAO) as a cocatalyst were mixed at a ratio of Al/Zr=2,000, and the previously prepared catalyst was added to the reactor. At this time, the amount of the catalyst was adjusted to 0.8 to 3.2 mg depending on the activity.

Thereafter, nitrogen was injected to be 1 kgf/cm² including hexane vapor pressure, and then ethylene was injected to be 4 kgf/cm², so that the total pressure was adjusted to 5 kgf/cm². 1-Hexene was added while stirring the reactor at 1,000 rpm and polymerization was performed for 15 minutes. After completing the polymerization, reaction gas was vented and the reactor was opened to obtain a produced resin. The resin was dried for 24 hours or more and its physical properties were measured. Amounts of the used catalyst and 1-hexene are shown in the following Table 1.

### Comparative Example 1: Synthesis of ethylene 1-hexene copolymer using Compound A-1

Olefin polymerization was performed in the same manner as in Example 1, except that Compound A-1 was used as the transition metal compound. Amounts of the used catalyst and 1-hexene are shown in the following Table 1.

### Comparative Example 2: Synthesis of ethylene 1-hexene copolymer using Compound A-2

Olefin polymerization was performed in the same manner as in Example 1, except that Compound A-2 was used as the transition metal compound. Amounts of the used catalyst and 1-hexene are shown in the following Table 1.

The physical properties of polyolefins obtained in Example 1 and Comparative Examples 1 and 2 were measured, and then the results are shown in the following Table 1.

**[Table 1]**

| | 1-Hexene (ml) | Catalyst (mg) | Activity (T/mol ·h) | Activity (gPE/gcat ·h) | Mw (g/mol) | PDI | Density (g/cm³) | Tm (°C) |
|---|---|---|---|---|---|---|---|---|
| Example 1 | 0 | 1.6 | 30.52 | 57,500 | 74,900 | 3.96 | 0.962 | 133.13 |
| | 15 | 1.6 | 47.78 | 90,000 | 67,000 | 3.65 | 0.937 | 124.53 |
| | 30 | 1.6 | 62.37 | 117,500 | 61,600 | 3.76 | 0.932 | 122.29 |
| | 45 | 1.6 | 67.68 | 127,500 | 56,600 | 3.83 | 0.926 | 110.3, 118.96 |
| Comparative Example 1 | 15 | 3.2 | 15.70 | 37,500 | 170,385 | 3.25 | 0.960 | 125 |
| | 45 | 3.2 | 17.27 | 41,250 | 84, 188 | 2.73 | 0.944 | 119.57 |
| Comparative Example 2 | 0 | 3.2 | 35.43 | 72,500 | 263,200 | 2.30 | 0.956 | 134.27 |
| | 15 | 1.6 | 46.43 | 95,000 | 343,986 | 2.62 | 0.936 | 124.78 |
| | 30 | 1.6 | 50.09 | 102,500 | 282,928 | 2.40 | 0.936 | 122.44 |
| | 45 | 1.6 | 57.42 | 117,500 | 290,555 | 2.60 | 0.922 | 120.05 |

| | | | | | | | | |
|---|---|---|---|---|---|---|---|---|
| * MW: weight average molecular weight, PDI: polydispersity index, Tm: melting point | | | | | | | | |

According to exemplary embodiments of the present invention, a transition metal compound for catalyst for olefin polymerization which has a unique three-dimensional structure, may adjust the physical properties of a polymer, and in particular, allows preparation of a polyolefin-based resin having excellent processability, and a catalyst for olefin polymerization including the same may be provided.

## Claims

1. A transition metal compound represented by the following Chemical Formula 1: 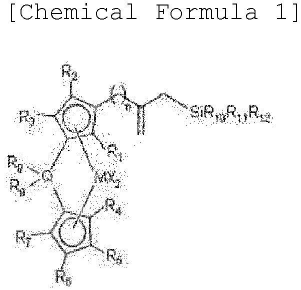 wherein n is an integer of 1 to 20,
M is titanium (Ti), zirconium (Zr), or hafnium (Hf),
X is independently of each other a halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido,
Q is carbon (C), silicon (Si), germanium (Ge), or tin (Sn),
R₁ to R₇ are independently of one another hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl, but R₁ to R₇ may be independently of one another connected to an adjacent group to form a substituted or unsubstituted and saturated or unsaturated C₄₋₂₀ ring,
R₈ and R₉ are independently of each other substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl, but R₈ and R₉ may be connected to each other to form a substituted or unsubstituted and saturated or unsaturated C₂₋₂₀ ring, and
R₁₀ to R₁₂ are independently of one another substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl.

2. The transition metal compound of claim 1, wherein in Chemical Formula 1, n is 1 or 2, M is zirconium or hafnium, X is a halogen or substituted or unsubstituted C₁₋₂₀ alkyl, Q is silicon, R₁ to R₃ are hydrogen, respectively, R₄ to R₇ are hydrogen or substituted or unsubstituted C₁₋₂₀ alkyl, respectively, R₈ and R₉ are substituted or unsubstituted C₁₋₂₀ alkyl, respectively, and R₁₀ to R₁₂ are substituted or unsubstituted C₁₋₂₀ alkyl or substituted or unsubstituted C₆₋₂₀ aryl, respectively.

3. The transition metal compound of claim 1, wherein the compound represented by Chemical Formula 1 is any one of compounds represented by the following Chemical Formulae 1-1 to 1-16: 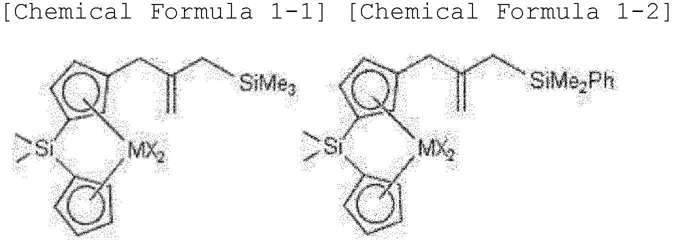 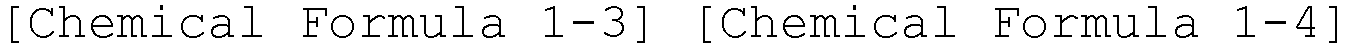 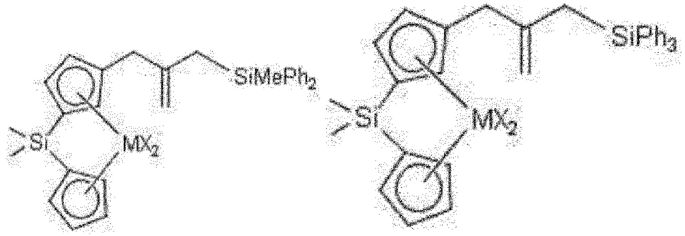 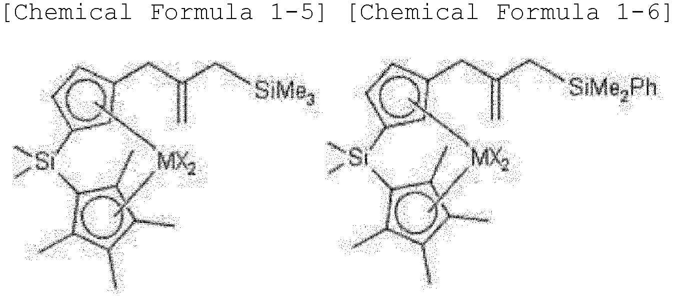 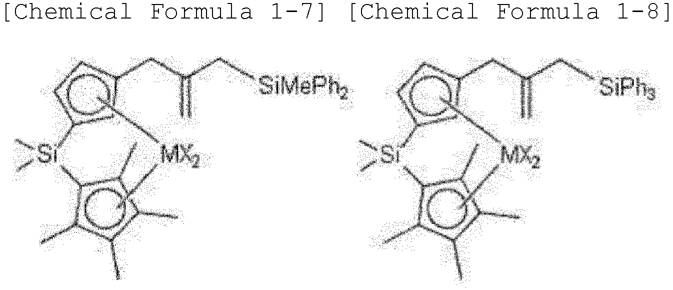 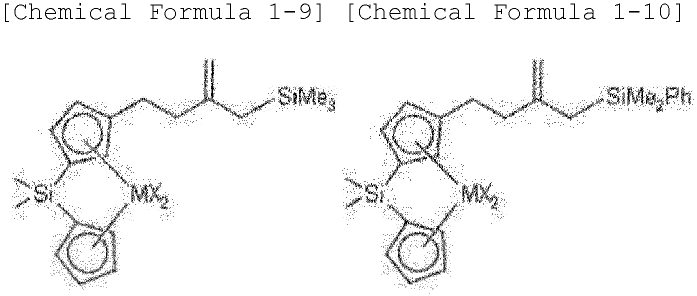 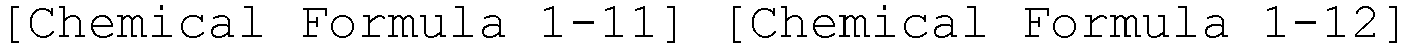 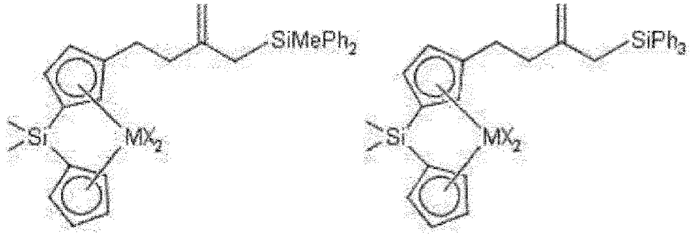 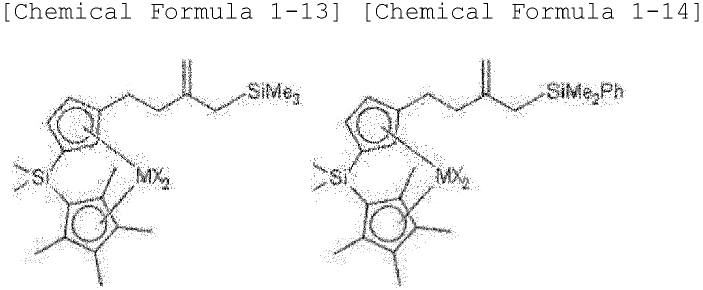 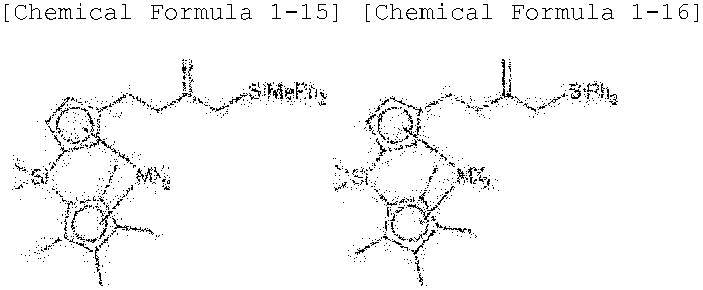 wherein M is zirconium or hafnium, X is a halogen or substituted or unsubstituted C₁₋₂₀ alkyl, respectively, Me is a methyl group, and Ph is a phenyl group.

4. The transition metal compound of claim 4, wherein the compound represented by Chemical Formula 1 is a compound represented by Chemical Formula 1-17 or 1-18: 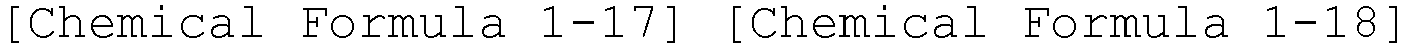 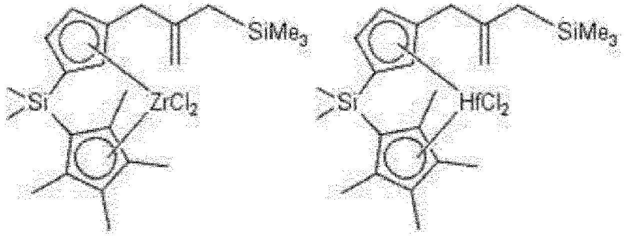 wherein Me is a methyl group.

5. A catalyst for olefin polymerization comprising: the transition metal compound of any one of claims 1 to 4; and a cocatalyst compound.

6. The catalyst for olefin polymerization of claim 5, wherein the cocatalyst compound is one or more selected from the group consisting of a compound represented by the following Chemical Formula 2, a compound represented by the following Chemical Formula 3, and a compound represented by the following Chemical Formula 4: 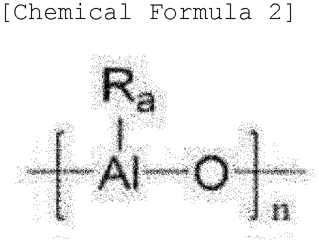 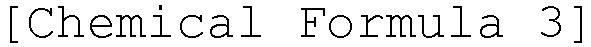 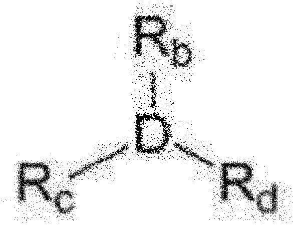
[Chemical Formula 4] [L-H]⁺[Z(A)₄]⁻ or [L]⁺[Z(A)₄]⁻
wherein n is an integer of 2 or more, Rₐ is a halogen atom, a C₁₋₂₀ hydrocarbon group, or a C₁₋₂₀ hydrocarbon group substituted with a halogen,
D is aluminum (Al) or boron (B), R_{b}, R_{c}, and R_{d} are independently of one another a halogen atom, a C₁₋₂₀ hydrocarbon group, a C₁₋₂₀ hydrocarbon group substituted with a halogen, or a C₁₋₂₀ alkoxy group,
L is a neutral or cationic Lewis base, [L-H]⁺ and [L]⁺ are a Bronsted acid, Z is a group 13 element, and A is independently of each other a substituted or unsubstituted C₆₋₂₀ aryl group or a substituted or unsubstituted C₁₋₂₀ alkyl group.

7. The catalyst for olefin polymerization of claim 6, wherein the compound represented by Chemical Formula 2 is at least one selected from the group consisting of methylaluminoxane, ethylaluminoxane, isobutylaluminoxane, and butylaluminoxane.

8. The catalyst for olefin polymerization of claim 6, wherein the compound represented by Chemical Formula 3 is at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron.

9. The catalyst for olefin polymerization of claim 6, wherein the compound represented by Chemical Formula 4 is at least one selected from the group consisting of triethylammonium tetraphenylboron, tributylammonium tetraphenylboron, trimethylammonium tetraphenylboron, tripropylammonium tetraphenylboron, trimethylammonium tetra(*p*-tolyl)boron, trimethylammonium tetra(*o,p-*dimethylphenyl) boron, tributylammonium tetra(*p-*trifluoromethylphenyl)boron, trimethylammonium tetra(*p-*trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(*p*-tolyl)aluminum, tripropylammonium tetra(*p-*tolyl)aluminum, triethylammonium tetra(*o,p-*dimethylphenyl)aluminum, tributylammonium tetra(*p-*trifluoromethylphenyl) aluminum, trimethylammonium tetra(*p-*trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammoniumtetra(*p*-tolyl)boron, triethylammonium tetra(*o*,*p*-dimethylphenyl)boron, tributylammonium tetra(*p*-trifluoromethylphenyl)boron, triphenylcarbonium tetra(*p*-trifluoromethylphenyl)boron, and triphenylcarbonium tetrapentafluorophenylboron.

10. The catalyst for olefin polymerization of claim 5, further comprising a carrier for supporting the transition metal compound, the cocatalyst compound, or both.

11. The catalyst for olefin polymerization of claim 10, wherein the carrier includes at least one selected from the group consisting of silica, alumina, and magnesia.

12. The catalyst for olefin polymerization of claim 10, wherein an amount of the transition metal compound supported on the carrier is 0.001 to 1 mmol based on 1 g of the carrier, and an amount of the cocatalyst compound supported on the carrier is 2 to 15 mmol based on 1 g of the carrier.

13. A polyolefin obtained by polymerizing an olefin-based monomer in the presence of the catalyst for olefin polymerization of claim 5.

14. The polyolefin of claim 13, wherein the olefin-based monomer is at least one selected from the group consisting of C₂₋₂₀ α-olefin, C₁₋₂₀ diolefin, C₃₋₂₀ cycloolefin, and C₃₋₂₀ cyclodiolefin.

15. The polyolefin of claim 14, wherein the polyolefin is obtained by copolymerizing ethylene and 1-hexene.
